## Europäisches Patentamt

## European Patent Office

## Office européen des brevets

(19)

(11) Numéro de publication: **0 241 781**
**B1**

(12) **FASCICULE DE BREVET EUROPEEN**

(45) Date de publication du fascicule du brevet: **11.04.90**

(51) Int. Cl.⁵: **F 02 B 77/08, G 01 M 15/00**

(21) Numéro de dépôt: **87104479.8**

(22) Date de dépôt: **26.03.87**

(54) **Procédé de surveillance du fonctionnement d'un moteur à combustion interne en service.**

(30) Priorité: **28.03.86 FR 8604517**
**14.05.86 FR 8606934**

(43) Date de publication de la demande:
**21.10.87 Bulletin 87/43**

(45) Mention de la délivrance du brevet:
**11.04.90 Bulletin 90/15**

(84) Etats contractants désignés:
**AT BE CH DE FR GB IT LI NL SE**

(56) Documents cités:

**PATENT ABSTRACTS OF JAPAN, vol. 8, no. 228
(P-308)1665r, 19 octobre 1984; & JP-A-59 109
831 (MITSUBISHI DENKI K.K.) 25-06-1984**

(73) Titulaire: **SOCIETE D'ETUDES DE MACHINES
THERMIQUES S.E.M.T.
2, Quai de Seine
F-93202 Saint-Denis (FR)**

(72) Inventeur: **Klepacki, Wojciech
5 Terrasse des Reflets
F-92400 Courbevoie la Defense (FR)**

(74) Mandataire: **Weinmiller, Jürgen et al
Lennéstrasse 9 Postfach 24
D-8133 Feldafing (DE)**

Courier Press, Leamington Spa, England.

## Description

L'invention concerne un procédé de surveillance du fonctionnement d'un moteur à combustion interne en service.

L'expérience montre que, dans un moteur à combustion interne, tous les phénomènes mécaniques et thermiques sont générateurs de vibrations et ce fait a été exploité dans les procédés de détection de cliquetis ou de cognement. De tels procédés exigent en particulier que le bruit de fond qui risquerait de masquer la présence d'une vibration anormale, soit maîtrisé voire annulé par un traitement approprié du signal. Ceci est décrit dans le document FR 2 504 592. L'objectif principal des procédés de ce genre est une détection de l'évènement, à caractère tout ou rien, en vue d'entreprendre une action aussi immédiate que possible pour le supprimer. Ces procédés sont en général mis en oeuvre pour des moteurs dont les variations de charge sont fréquentes et rapides et ils ne fournissent aucun renseignement statistique sur la vie du moteur.

La présente invention propose la surveillance sur une longue période du niveau de sollicitation supporté par les organes voisins de la chambre de combustion d'un moteur dont les variations de charge sont lentes et/ou peu fréquentes, dans le but de prendre des décisions immédiates de modification des paramètres de conduite ou des décisions d'action préventive ou curative.

La présente invention a pour objet un procédé de surveillance du fonctionnement d'un moteur à combustion interne en service, caractérisé en ce que:

on enregistre, sur un ou des moteurs témoins de même type, la variation de pression régnant dans la chambre de combustion pour diverses valeurs des paramètres de conduite, ceux-ci étant au besoin temporairement modifiés pour provoquer plusieurs états stabilisés de charge allant de 0 à 100% et pour provoquer des variations de l'amplitude des oscillations de pression autour de la valeur moyenne de la pression allant de la valeur minimum des amplitudes à une valeur maximum égale à dix fois la valeur minimum, l'enregistrement étant fait dans une gamme de fréquence allant de 0 à 30.000 Hz et pour un ou plusieurs cycles moteur successifs ou non,

simultanément, on enregistre, en divers points des organes voisins de la ou des chambres de combustion du ou des moteurs témoins, l'amplitude et la fréquence des vibrations provoquées par l'ensemble du fonctionnement dans une gamme de fréquences allant de 0 à 30.000 Hz,

on calcule le rapport de la puissance spectrale du signal de pression à la puissance spectrale de chacun des signaux délivrés par les différents points de mesure, ou le rapport de toutes valeurs représentatives de ces puissances,

on détermine pour quel point de mesure la valeur du rapport s'écarte le moins de la constante quel que soit le niveau de charge, ce point de mesure étant considéré comme délivrant un signal représentatif,

on installe, sur le moteur en service, un dispositif de mesure de vibrations à l'emplacement déduit du ou des moteurs témoins et on utilise le niveau de puissance spectrale du signal émis à diverses périodes du service normal de ce moteur, ou une valeur représentative de cette puissance, pour apprécier le comportement des organes voisins de la chambre de combustion et/ ou la sévérité des sollicitations qu'ils supportent et déclencher des actions appropriées.

L'utilisation de la puissance spectrale conduit à deux modes opératoires possibles.

Selon un premier mode opératoire, on calcule la puissance spectrale du signal représentatif à différents moments du fonctionnement du moteur en service, à intervalles réguliers ou non et pour la durée d'au moins un cycle complet.

Selon un deuxième mode opératoire, on calcule la puissance spectrale du signal représentatif à différents moments du fonctionnement du moteur en service, à intervalles réguliers ou non et pour un ou plusieurs cycles moteur dont on ne retient pour chacun d'eux qu'une ou plusieurs parties.

L'utilisation d'une valeur représentative de la puissance spectrale peut prendre différentes formes.

Selon un premier exemple, on calcule le niveau du signal constant et stable qui restitue la même puissance spectrale que le signal représentatif, ce niveau constituant un niveau équivalent de sollicitations ou de détection du comportement particulier d'un ou des composants voisins de la chambre de combustion.

Selon un deuxième exemple, on prend comme valeur représentative l'énergie vibratoire du signal obtenu par le dispositif de mesure à différents moments du fonctionnement du moteur en service.

De préférence, à partir de l'énergie vibratoire du signal obtenu par le dispositif de mesure, on calcule le niveau équivalent du signal constant et stable qui donne la même énergie vibratoire que les vibrations fluctuantes qui se sont réellement produites, le niveau équivalent étant calculé à différents moments du fonctionnement du moteur en service, à intervalles réguliers ou non et pour un ou plusieurs cycles moteur dont on ne retient, pour chacun d'eux, qu'une ou plusieurs parties.

Avantageusement, on détermine des périodes de mesure contenant un ou plusieurs cycles successifs ou non, chaque période étant contenue dans une phase de fonctionnement du moteur en service où la charge ne varie pas ou ne varie que faiblement.

Pour une observation à long terme, on mémorise les valeurs des niveaux équivalents relevés et on les range par classes de niveaux.

Finalement, on compare la valeur des différents niveaux et/ou le nombre de niveaux atteint dans les différentes classes avec des valeurs de consigne déterminées par expériences pour le type de moteur en service considéré, le résultat de la comparaison servant à décider de la modification éventuelle de un ou plusieurs paramètres de consigne et/ou à déclencher des actions d'entretien préventif.

Il est décrit ci-après, à titre d'exemple, une mise en oeuvre préférée du procédé de l'invention.

De nombreux facteurs peuvent influencer le niveau de sollicitation supporté par les organes voisins de la chambre de combustion tels que par exemple, la chemise, le piston, la culasse ... La combustion peut passer en régime détonant pour tout ou partie du volume de la chambre, que ce soit en allumage commandé ou en cycle Diesel. La cause peut résider dans le calage de l'allumage ou dans une mauvaise séquence de préinjection. Elle peut se trouver également dans la variation des caractéristiques du carburant ou des conditions environnantes: température, humidité, etc ... Dans les moteurs à combustion interne suralimentés, une variation de l'excès d'air provoquée par exemple par l'encrassage du turbo-compresseur ou une diminution de l'efficacité de la réfrigération d'air peut élever anormalement le niveau des sollicitations dues à la combustion. De même, la fermeture des soupapes déclenche des sollicitations qui, si elles ne sont pas directement nuisibles, renseignent sur l'état mécanique des réglages, des jeux et des vitesses de fonctionnement.

L'expérience a montré que les organes voisins de la chambre de combustion, en particulier la culasse, transmettent des vibrations qui rendent compte de l'évolution des pressions dans la chambre et du comportement des organes mobiles (soupapes, aiguilles d'injecteur) dont la mesure et l'enregistrement sont plus aisés à mettre en oeuvre et plus fiables dans le temps qu'une mesure directe des pressions dans la chambre elle-même. Lorsque les oscillations de pression excitent les composants en particulier à travers les fréquences propres de résonance de la chambre de combustion, elles engendrent des sollicitations mécaniques et un accroissement des échanges thermiques qui, si non dommageables dans l'instant, peuvent devenir dangereux dans le temps par cumul des dommages.

La dérive dans le temps du niveau équivalent cité plus haut, pour une condition de charge donnée, constitue une indication sur l'évolution de paramètres-clés, tels l'instant d'allumage, la pression et le débit d'air de suralimentation, les caractéristiques du carburant, etc ...

Par un découpage sélectif du signal permettant d'isoler des périodes particulières du cycles moteur, on met également en évidence le comportement de tel organe ou fonction, par exemple la fermeture d'une soupape ou la phase d'injection.

Il est en fait possible d'établir une relation d'une part entre la valeur limite d'un niveau équivalent de sollicitations à partir duquel des détériorations apparaissent sur un ou des composants ou fonctions et d'autre part entre le nombre de niveaux équivalents comptés dans une classe et certains types de détériorations, ceci ayant une analogie directe avec le comportement en fatigue des matériaux. Par exemple, il est possible de relier une valeur seuil de niveau équivalent à l'apparition d'un phénomène de cavitation-érosion dans la partie de la chemise proche de la culasse, alors que cette même partie de la chemise ne sera soumise à une fissuration d'origine thermique qu'après un nombre d'apparitions suffisant d'une valeur donnée de niveaux équivalents.

Pour un type donné de moteur, il est nécessaire de déterminer la corrélation entre la valeur ou le nombre de valeurs d'un niveau equivalent et l'apparition du phénomène qu'on veut surveiller, cette corrélation étant conservée pour tous les moteurs d'un même type.

Pour atteindre ces résultats, le procédé prévoit la mémorisation de la valeur de chaque niveau équivalent obtenu à la suite du traitement de chacun des groupes de mesures effectuées. L'exploitation statistique des valeurs mémorisées permet de tirer des enseignements sur la sévérité des conditions de fonctionnement du moteur. Suivant les résultats de cette exploitation, il est possible de prendre des décisions de court terme visant à modifier immédiatement certains paramètres de conduite alors que le moteur est en service, mais il est également possible, en partant d'observations portant sur une longue période, de prendre des décisions à plus long terme d'entretien préventif visant à prévenir la défaillance d'un organe par fatigue par exemple.

**Revendications**

1. Procédé de surveillance du fonctionnement d'un moteur à combustion interne en service, caractérisé en ce que:

on enregistre, sur un ou des moteurs témoins de même type, la variation de pression régnant dans la chambre de combustion pour diverses valeurs des paramètres de conduite, ceux-ci étant au besoin temporairement modifiés pour provoquer plusieurs états stabilisés de charge allant de 0 à 100% et pour provoquer des variations de l'amplitude des oscillations de pression autour de la valeur moyenne de la pression allant de la valeur minimum des amplitudes à une valeur maximum égale à dix fois la valeur minimum, l'enregistrement étant fait dans une gamme de fréquence allant de 0 à 30.000 Hz et pour un ou plusieurs cycles moteur successifs ou non,

simultanément, on enregistre, en divers points des organes voisins de la ou des chambres de combustion du ou des moteurs témoins, l'amplitude et la fréquence des vibrations provoquées par l'ensemble du fonctionnement dans une gamme de fréquences allant de 0 à 30.000 Hz,

on calcule le rapport de la puissance spectrale du signal de pression à la puissance spectrale de chacun des signaux délivrés par les différents points de mesure, ou le rapport de toutes valeurs représentatives de ces puissances,

on détermine pour quel point de mesure la valeur du rapport s'écarte le moins de la constante quel que soit le niveau de charge, ce point de mesure étant considéré comme délivrant un signal représentatif,

on installe, sur le moteur en service, un dispositif de mesure de vibrations à l'emplacement déduit du ou des moteurs témoins et on utilise le niveau de puissance spectrale du signal émis à diverses périodes du service normal de ce moteur, ou une valeur représentative de cette puissance, pour apprécier le comportement des organes voisins de la chambre de combustion et/ou la sévérité des sollicitations qu'ils supportent et déclencher des actions appropriées.

2. Procédé selon la revendication 1, caractérisé en ce que l'on calcule la puissance spectrale du signal représentatif à différents moments du fonctionnement du moteur en service, à intervalles réguliers ou non et pour la durée d'au moins un cycle complet.

3. Procédé selon la revendication 1, caractérisé en ce que l'on calcule la puissance spectrale du signal représentatif à différents moments du fonctionnement du moteur en service, à intervalles réguliers ou non et pour un ou plusieurs cycles moteur dont on ne retient pour chacun d'eux qu'une ou plusieurs parties.

4. Procédé selon la revendication 1, caractérisé en ce que l'on calcule le niveau du signal constant et stable qui restitue la même puissance spectrale que le signal représentatif, ce niveau constituant un niveau équivalent de sollicitations ou de détection du comportement particulier d'un ou des organes voisins de la chambre de combustion.

5. Procédé selon la revendication 1, caractérisé en ce que l'on prend comme valeur représentative l'énergie vibratoire du signal obtenu par le dispositif de mesure à différents moments du fonctionnement du moteur en service.

6. Procédé selon la revendication 5, caractérisé en ce que, à partir de l'énergie vibratoire du signal obtenu par le dispositif de mesure, on calcule l'énergie vibratoire du signal obtenu par le dispositif de mesure et l'on calcule le niveau équivalent du signal constant et stable qui donne la même énergie vibratoire que les vibrations fluctuantes qui se sont réellement produites.

7. Procédé selon la revendication 6, caractérisé en ce que le niveau équivalent est calculé à différents moments du fonctionnement du moteur en service, à intervalles réguliers ou non et pour un ou plusieurs cycles moteur dont on ne retient, pour chacun d'eux, qu'une ou plusieurs parties.

8. Procédé selon l'une des revendications précédentes, caractérisé en ce que l'on détermine des périodes de mesure contenant un ou plusieurs cycles successifs ou non, chaque période étant contenue dans une phase de fonctionnement du moteur en service où la charge ne varie pas ou ne varie que faiblement.

9. Procédé selon la revendication 8, caractérisé en ce que l'on mémorise les valeurs des niveaux équivalents relevés et en ce qu'on les range par classes de niveaux.

10. Procédé selon la revendication 9, caractérisé en ce que l'on compare la valeur des différents niveaux et/ou le nombre de niveaux atteint dans les différentes classes avec des valeurs de consigne déterminées par expériences pour le type de moteur en service considéré, le résultat de la comparaison servant à décider de la modification éventuelle de un ou de plusieurs paramètres de consigne et/ou à déclencher des actions d'entretien préventif.

**Patentansprüche**

1. Verfahren zur Überwachung der Funktionsweise eines laufenden Verbrennungsmotors, gekennzeichnet durch folgende Schritte:

es wird bei einem oder mehreren Vergleichsmotoren des gleichen Typs die Veränderung des in der Brennkammer herrschenden Druckes für verschiedene Betriebsparameterwerte aufgezeichnet, wobei diese, wenn nötig, vorübergehend geändert werden, um mehrere stabilisierte Lastzustände zwischen 0 und 100% und Veränderungen der Amplitude der Druckschwingungen im Bereich um den Mittelwert des Druckes zu verursachen, die sich vom Minimalwert der Amplituden bis zu einem Maximalwert erstrecken, der zehnmal größer als der Minimalwert ist, wobei die Aufzeichnung in einem Frequenzbereich von 0 bis 30000 Hz und über einen oder mehrere aufeinanderfolgende oder nicht aufeinanderfolgende Motorzyklen erfolgt;

gleichzeitig wird an verschiedenen Punkten der Organe in der Nähe der Verbrennungskammer(n) des Vergleichsmotors oder der Vergleichsmotoren die Amplitude und die Frequenz der Vibrationen aufgezeichnet, die von der gesamten Anlage im Frequenzbereich von 0 bis 30000 Hz verursacht werden;

es wird das Verhältnis der spektralen Leistung des Drucksignals zur spektralen Leistung jedes von den verschiedenen Meßpunkten gelieferten Signals, oder das Verhältnis aller repräsentativen Werte dieser Leistung berechnet;

es wird bestimmt, bei welchem Meßpunkt der Verhältniswert am wenigsten von der Konstanten abweicht, und zwar unabhängig vom Lastniveau, wobei dieser Meßpunkt als ein repräsentatives Signal liefernder Meßpunkt betrachtet wird; und

auf dem laufendem Motor wird an der ermittelten Stelle des Vergleichsmotors oder der Vergleichsmotoren eine Vorrichtung zur Vibrationsmessung angebracht, und es wird der Pegel der spektralen Leistung des in verschiedenen Perioden des Normalbetriebs dieses Motors ausgesandten Signals, oder ein repräsentativer Wert für diese Leistung, benutzt, um das Verhalten der Organe in der Nähe der Brennkammer und/oder die Stärke der Belastungen zu beurteilen, welchen die Organe ausgesetzt sind, und um die geeigneten Maßnahmen zu treffen.

2. Verfahren nach Anspruch 1, dadurch gekennzeichnet, daß die spektrale Leistung des repräsentativen Signals für verschiedene Funktionszeitpunkte in regelmäßigen oder unregelmäßigen Intervallen des laufenden Motors und für die Dauer mindestens eines vollen Zyklus berechnet wird.

3. Verfahren nach Anspruch 1, dadurch gekennzeichnet, daß die spektrale Leistung des repräsentativen Signals für verschiedene Funktionszeitpunkte in regelmäßigen oder unregelmäßigen Intervallen des laufenden Motors und für die Dauer eines oder mehrerer Motorzyklen berechnet wird, von denen jedoch nur jeweils ein Teil oder mehrere Teile berücksichtigt werden.

4. Verfahren nach Anspruch 1, dadurch gekennzeichnet, daß der Pegel desjenigen konstanten und stabilen Signals berechnet wird, das die gleiche spektrale Leistung wie das repräsentative Signal aufweist, wobei dieser Pegel einen äquivalenten Pegel der Beanspruchungen bzw. der Erfassung des besonderen Verhaltens eines oder mehrerer Organe in der Nähe der Brennkammer darstellt.

5. Verfahren nach Anspruch 1, dadurch gekennzeichnet, daß als repräsentativer Wert die Vibrationsenergie desjenigen Signals gewählt wird, das von der Meßvorrichtung in verschiedenen Funktionszeitpunkten des laufenden Motors erfaßt wird.

6. Verfahren nach Anspruch 5, dadurch gekennzeichnet, daß auf der Basis der Vibrationsenergie des von der Meßvorrichtung erfaßten Signals der äquivalente Pegel desjenigen konstanten und stabilen Signals berechnet wird, welches die gleiche Vibrationsenergie liefert wie die tatsächlich aufgetretenen fluktuierenden Vibrationen.

7. Verfahren nach Anspruch 6, dadurch gekennzeichnet, daß der äquivalente Pegel zu verschiedenen Funktionszeitpunkten des laufenden Motors wird in regelmäßigen oder unregelmäßigen Intervallen und über einen oder mehrere Motorzyklen berechnet wird, von denen jedoch nur jeweils ein Teil oder mehrere Teile berücksichtigt werden.

8. Verfahren nach einem der vorhergehenden Ansprüche, dadurch gekennzeichnet, daß Meßperioden über einen oder mehrere aufeinanderfolgende oder nicht aufeinanderfolgende Zyklen bestimmt werden, wobei jede Periode innerhalb einer Funktionsphase des laufenden Motors liegt, in welcher sich die Last nicht oder nur wenig ändert.

9. Verfahren nach Anspruch 8, dadurch gekennzeichnet, daß die Werte der erfaßten äquivalenten Pegel aufgezeichnet und nach Pegelklassen geordnet werden.

10. Verfahren nach Anspruch 9, dadurch gekennzeichnet, daß die Werte der verschiedenen Pegel und/oder die Anzahl der in den verschiedenen Klassen angefallenen Pegel mit Sollwerten verglichen werden, die für den betrachteten Typ des laufenden Motors durch Versuche bestimmt wurden, wobei das Ergebnis des Vergleichs dazu dient, eine Entscheidung über eine mögliche Abänderung eines oder mehrerer Zielparameter zu treffen und/ oder präventive Wartungsmaßnahmen zu veranlassen.

**Claims**

1. A method for monitoring the operation of a running combustion engine, characterized in that it includes the following steps:

recording the change of pressure occuring in the combustion chamber of one or more same-type reference engines for various values of the operating parameters, said parameters being temporarily modified as required to bring about a plurality of stabilized load conditions ranging from 0 to 100% and to cause variations of the amplitude of the pressure oscillations about the mean value of the pressure ranging from the minimum value of the amplitudes to a maximum value equal to ten times the minimum value, the recording being made over a range of frequencies from 0 to 30000 Hz and covering on or more successive or nonsuccessive engine cycles;

simultaneously recording at various points of the components surrounding the combustion chamber or chambers of the reference engine or engines the amplitude and the frequency of the vibrations generated by operations in a frequency range of 0 to 30000 Hz;

computing the ratio between the spectral power of the pressure signal and the spectral power of each of the signals supplied from each of the measuring points, or of the ratio of any values representative of said powers;

determining for which measuring point this ratio differs least from the constant value irrespective of load level, said measuring point being assumed to deliver a representative signal;

installing on the running engine a vibration measuring device at the location deduced from the previous testing of the reference engine(s) and using the spectral power level of the signal emitted at various periods during normal-duty operation of the engine, or a value representative of this power, to appreciate the behaviour of the components surrounding the combustion chamber and/or the severity of the stresses to which they are subjected and to cause suitable action.

2. A method according to claim 1, characterized in that the spectral power of the representative signal is computed for different instants of operation of the running engine, at regular or irregular intervals and over a period of at least on complete cycle.

3. A method according to claim 1, characterized in that the spectral power of the representative signal is computed for different instants of the running engine, at regular or irregular intervals and over one or more engine cycles, and only one or some parts of each cycle are retained.

4. A method according to claim 1, characterized in that the level of the constant and stable signal reproducing the same spectral power as the representative signal is computed, said level constituting an equivalent level for expressing the stresses or for detecting the specific behaviour of one or several components surrounding the combustion chamber.

5. A method according to claim 1, characterized in that the vibratory energy of the signal obtained by the measuring system at different instants of operation of the running engine is taken as the said representative value.

6. A method according to claim 5, characterized in that based upon the vibratory energy of the signal obtained by the measuring system, the equivalent level of the constant, stable signal which yields the same vibratory energy as the fluctuating vibrations which actually occured in the engine, is computed.

7. A method according to claim 6, characterized in that the equivalent level is computed for different instants of operation of the running engine, at regular or irregular intervals and for one or more engine cycles, only one or some parts whereof are retained.

8. A method according to anyone of the preceding claims, characterized in that the measurement periods including one or more successive or nonsuccessive cycles are determined, each period being comprised in an operating phase of the running engine when the load varies little or not at all.

9. A method according to claim 8, characterized in that the values of the retained equivalent levels are recorded and listed by classes of level.

10. A method according to claim 9, characterized in that the value of the different levels and/or the number of levels reached in the different classes is compared with set point values determined by experiment with the given type of running engine and the result of this comparison is used to decide whether or not to modify one or more set point parameters and/or to cause preventive maintenance action.